# EUROPÄISCHE PATENTSCHRIFT

(11) **EP 0 894 206 B1**
(45) Veröffentlichungstag und Bekanntmachung des Hinweises auf die Patenterteilung: **16.08.2000**
(21) Anmeldenummer: 97919257.2
(22) Anmeldetag: 08.03.1997
(51) Int. Cl.: F16C 33/14, C21D 1/09

(54) **SCHICHTVERBUNDWERKSTOFF UND VERFAHREN ZUR VERBESSERUNG DER OBERFLÄCHENHÄRTE VON SCHICHTVERBUNDWERKSTOFFEN**
LAMINATED COMPOSITE MATERIAL AND METHOD OF IMPROVING THE SURFACE HARDNESS OF LAMINATED COMPOSITE MATERIALS
MATERIAU COMPOSITE STRATIFIE ET PROCEDE PERMETTANT D'AMELIORER LA DURETE SUPERFICIELLE DE MATERIAUX COMPOSITES STRATIFIES

(30) Priorität: 27.03.1996 DE 19611929
(43) Veröffentlichungstag der Anmeldung: 03.02.1999
(73) Patentinhaber: Federal-Mogul Wiesbaden GmbH, 65201 Wiesbaden (DE)
(72) Erfinder: ANDLER, Gerd, D-60594 Frankfurt (DE); ARNOLD, Gerhard, D-65321 Heidenrod (DE)
(86) Internationale Anmeldenummer: DE9700453
(87) Internationale Veröffentlichungsnummer: WO9736112

(56) Entgegenhaltungen:
- EP-A- 0 130 175
- EP-A- 0 130 176
- WO-A-89/10434
- WO-A-91/14799
- DE-A- 2 209 148
- DE-A- 3 635 751
- DE-A- 3 636 641
- DE-C- 688 246

## Beschreibung

Die Erfindung betrifft einen Schichtverbundwerkstoff gemäß Oberbegriff des Patentanspruchs 1, sowie ein Verfahren zur Modifikation von Schichtverbundwerkstoffsystemen, insbesondere zur Verbesserung der Oberflächenhärte von solchen Systemen nach dem Oberbegriff des Anspruchs 6. Die Verwendung von Schichtverbundwerkstoffen bestehend aus Stahl mit einer Gleitschicht aus Gleitlagerwerkstoffen (z.B. Al- oder Cu-Basiswerkstoffe mit Weichphasen wie z. B. Zinn, Blei und/oder Wismut) für tribologische Anwendungen ist seit vielen Jahren bekannt. Zur Herstellung solcher Verbundsysteme haben sich klassische Verfahren wie Walzplattieren, Gießplattieren, Sintern oder Galvanisieren bestens bewährt, aber auch neue Verfahren wie Sputtern, Bedampfen oder Plasmabeschichten zählen zum Stand der Technik.

Alle diese Verfahren zur Herstellung solcher Schichtverbundwerkstoffe zeichnen sich dadurch aus, daß nach dem Beschichten des Trägerwerkstoffs Stahl mit einem Gleitwerkstoff entweder Umform- oder Oberflächenbearbeitungsprozesse nachgeschaltet werden. Dies ist beim Walzplattieren, Gießplattieren, Sintern und Plasmabeschichten üblich. Oft werden auch Formgebungsprozesse vor dem Aufbringen der endgültigen Laufschicht durchgeführt, wie dies beim Galvanisieren, Sputtern und Bedampfen der Fall ist. In keinem dieser Fertigungsprozesse zur Herstellung solcher Schichtverbundsysteme werden am endgültigen, sprich fertigen, Bauteil Veränderungen am Trägerwerkstoff Stahl mit dem Ziel durchgeführt, auch diesen hinsichtlich seiner tribologischen Eigenschaften zu optimieren, so daß bei bestimmten Anwendungsfällen entsprechende Nachteile hinsichtlich der Funktionsfähigkeit oder der Standzeit des Bauteils auftreten. Im folgenden seien für diesen Sachverhalt zwei Beispiele angeführt:

Die im modernen Motorenbau eingesetzten Pleuellager bestehen aus Schichtverbundsystemen ähnlich dem Aufbau Stahl, Lagermetall und eventuell einer Drittschicht, die durch galvanische oder andere Oberflächenbeschichtungsverfahren appliziert wird. In nahezu allen Fällen geht man von beschichtetem Bandmaterial aus, auf das die spätere Funktionsschicht durch Walzplattieren. Gießplattieren oder Sintern aufgebracht wird. Nach dem Beschichten durchläuft das Halbzeug mehrere Walz- und/oder Glühprozesse bis durch Umformprozesse wie Pressen oder Rollen die Lagerschale ihre endgültige Geometrie erhält.

Bei diesem Herstellungsverfahren werden meist unlegierte, kohlenstoffarme Stähle geringer Festigkeit eingesetzt. Die Gründe hierfür sind zum einen, daß die Lagerpreßvorgänge bei Substraten aus hochfesten Stählen technisch schwer zu beherrschen sind. und zum anderen, daß bei solchen Niedrigpreisprodukten Kostengesichtspunkte, d.h. Verzicht auf teurere Stähle, eine immer entscheidendere Rolle spielen. Bei der Herstellung solcher Teile kann auch nicht auf kaltverfestigtes oder oberflächengehärtetes Trägermaterial zurückgegriffen werden, da sich dessen höhere Ausgangshärte nicht über die einzelnen Fertigungsschritte (z.B. Glühungen des Halbzeuges) bis hin zum fertigen Lager erhalten läßt.

Im Zuge der immer weiter steigenden spezifischen Belastung solcher Bauteile durch Minimierung von Bauteilgröße (Gewichtsreduzierung und damit Kraftstoffeinsparung) und/oder den Bau immer leistungsfähigerer Motoren werden aber nicht nur höchste Anforderungen an die Lagermetallschicht selbst gestellt, sondern auch der Stahlrücken ist immer größeren Beanspruchungen ausgesetzt. Treten z.B. infolge hoher Belastungen oder Drehzahlen geringfügige Relativbewegungen zwischen Lagerrücken und Pleuelstange auf, kann dies bei wenig verschleißbeständigen Stählen, wie sie heute verwendet werden, zu Verschleißerscheinungen in Form von Riefenbildung oder Aufbauten auf dem Lagerrücken führen. Die Folgen sind eine Verringerung des Traganteils und damit der Wärmeabfuhr und die Begünstigung von Ölkohlebildung. Diese Effekte einzeln oder in Kombination können zu Fehlfunktionen bis hin zum kompletten Ausfall des Lagers führen.

Als weiteres Beispiel seien hier sogenannte Steuerplatten oder -scheiben angeführt wie sie in Radial- oder Axialkolbenmaschinen für hydraulische Pumpen und Motoren zum Einsatz kommen. Klassische Steuerplatten bestehen aus Verbundwerkstoffen, d.h. einem Stahlträger mit einer meist über Gießplattieren aufgebrachten Funktionsschicht aus typischen Lagermetallen wie z.B. CuPbSn-Legierungen.
Kommt es bei solchen Bauteilen unter hohen Lasten zu Relativbewegungen zwischen dem Stahlrücken der als Schichtverbundwerkstoff ausgelegten Steuerscheibe und dem gegenüberliegenden Maschinenteil kann dies zu Kaltverschweißungen zwischen der Steuerplatte und dem Gegenpart führen, d.h. zu Funktionsminderung des Tribosystems bis hin zum Komplettausfall.

Die DE 688246 C beschreibt ein Verfahren zum Härten von Lagerschalen aus Eisenlegierungen, wobei die Lauffläche der Lagerschale mittels eines Schweißbrenners behandelt wird und die die Lagerschale haltende Form gleichzeitig gekühlt wird. Bei diesem Verfahren wird lediglich die Gleitfläche beeinflußt.

Die DE 2209148 A betritft ein Verfahren zur Energiestrahl-Umschmelzbehandlung, mit dem Veredelungen von Werkstoffoberflächen durchgeführt werden. An eng begrenzten , untereinander nicht zusammenhängenden Oberflächenelementen wird die Oberfläche zur Gefügeveränderung aufgeschmolzen und anschließend abgekühlt. Die im Einzelfall zweckmäßigen Formen und Anordnungen der umzuschmelzenden Oberflächenelemente eines Werkstücks oder Bauteils richten sich nach den jeweiligen Anwendungen und den dort auftretenden Beanspruchungen, Verschleißproblemen und dergleichen. Es wird aber nicht auf die Behandlung von Schichtverbundwerkstoffen oder noch spezieller von Schichtverbundwerkstoffen, deren Bestandteile niedrigschmelzende Metalle sind, wie sie Anwendung bei Gleitelementen finden, eingegangen.

Die EP 01 30 175 A2 beschreibt ein Gleitlager mit einer Stützschale und einer auf der Stahlschale aufgebrachten Lagermetallschicht, die über die Laufflächenbreite verteilte, sich zumindest im wesentlichen in Laufrichtung erstreckende Laufflächenzonen bildet, zwischen denen Zonen mit einer gegenüber der Lagermetallschicht unterschiedlichen Härte vorgesehen sind. Um die zwischen den Lagerwerkstoffen unterschiedlicher Härte bedingten Schwierigkeiten mit Sicherheit zu vermeiden, wird eine Wärmebehandlung durchgeführt. Hierbei wird mit Laser- und Elektronenstrahlen ein Einschmelzen von Legierungswerkstoffen im Bereich von sich in Laufrichtung erstreckenden Zonen durchgeführt.

Auch die EP 01 30 176 A, aus der ein Verfahren nach dem Oberbegriff des Anspruchs 6 bekannt ist, behandelt den Einsatz von Laser- und Elektronenstrahlen zur Verbesserung von Gleitlagern durch eine zonenweise Härtung der Lagermetallschicht, d.h. auch hier erfolgt nur eine Behandlung der Lagermetallschicht.

Weiter ist das Oberflächenhärten einer Gleitschicht mittels hochenergetischer Strahlen aus der DE 36 35 751 A bekannt.

Angesichts des hierin angegebenen und diskutierten Standes der Technik ist es mithin Aufgabe der Erfindung, einen Schichtverbundwerkstoff der eingangs genannten Art bereitzustellen, der über verbesserte mechanisch-technologische Eigenschaften verfügt, insbesondere eine verbesserte Oberflächenhärte des Stahlrückens aufweist. Verfahrenstechnisch liegt der Erfindung das Problem zugrunde, einen Schichtverhundwerkstoff für die Anwendung als Gleitelement bestehend aus Stahlstützkörper und Lagermetallfunktionsschicht, so zu modifizieren, daß den an zwei Beispielen zuvor beschriebenen Nachteilen hinsichtlich der mechanisch-technologischen Eigenschaften des Gesamtsystems kostengünstig und wirkungsvoll begegnet werden kann, ohne, daß andere Eigenschaften des Bauteils negativ beeinflußt werden.

Diese sowie weitere nicht ausdrücklich wiedergegebene Aufgaben werden gelöst durch einem gattungsgemäßen Schichtverbundwerkstoff mit den Merkmalen des kennzeichnenden Teils des Anspruchs 1. Weitere zweckmäßige Fortbildungen des erfindungsgemäßen Schichtverbundwerkstoffes sind Gegenstand der abhängigen Produktansprüche. Im Hinblick auf das Verfahren bietet der Gegenstand des Anspruchs 6 eine Lösung der genannten Probleme. Bevorzugte Ausgestaltungen des Verfahrens der Erfindung werden in den auf Anspruch 6 rückbezogenen Unteransprüchen unter Schutz gestellt.

Dadurch, daß bei einem Schichtverbundwerkstoff mit Substratschicht aus Stahl und wenigstens einer darauf aufgebrachten Funktionsschicht aus Lagermetall, wobei das Substrat ein unlegierter oder niedriglegierter Stahl mit einem C-Gehalt von < 0,35% (wt/wt) ist und eine der oder den Funktionsschichten abgewandte Oberfläche aufweist, das Stahlsubstrat zumindest an Teilen der abgewandten Oberfläche eine um den Faktor 1,5 oder größer erhöhte Härte als in einer Tiefe aufweist, die etwa dem 0,1 fachen der Dicke des Stahlsubstrats entspricht, wobei die Härte als Vickers Härte HV 0.01 gemessen und die Tiefe oder Dicke von der abgewandten Oberfläche mit erhöhter Härte ausgehend orthogonal in Richtung der Funktionsschicht(en) bestimmt wird, gelingt es auf nicht ohne weiteres vorhersehbare Weise, die Verschleißbeständigkeit des Trägermaterials zu verbessern, ohne die Eigenschaften der Funktionsschichten nachteilig zu beinflussen. Insbesondere dadurch, daß ausgewählte Bereiche des Trägermaterials (z.B. der Stahlrücken von Lagerschalen, die Rückseite von Steuerscheiben, bei Anlaufscheiben im Bereich von Bohrungen, etc.) des Schicht verbundsystems mit hochenergetischen Strahlen behandelt werden, wobei die Temperaturführung derart gestaltet wird, daß eine Tiefenwirkung der Strahlen bis maximal dem 0,1 fachen der Gesamtdicke des Trägermaterials erzielt wird und der Temperaturanstieg im Bereich des Gleitmaterials maximal 80 % der Schmelztemperatur der niedrigstschmelzenden Konponente dieses Materials beträgt, wird die Rückseite des Stahlsubstrats nachträglich aufgehärtet.

In zweckmäßiger Ausführungsform weist die Substratschicht aus Stahl eine Dicke im Bereich von etwa 0,2-20 mm auf. Besonders bevorzugt liegt die Dicke des Substrats im Bereich von etwa 0,5-15 mm.

Die Stahlsubstratschicht eines erfindungsgemäßen Schichtverbundkörpers ist aus unlegiertem oder niedriglegiertem Stahl.

Wenn sie aus unlegiertem Stahl ist, ist es bevorzugt, daß dieser einen C-Gehalt im Bereich von 0.03 bis 0,06 % (wt/wt) aufweist.

Ist sie aus niedrig legiertem Stahl, so weist dieser zweckmäßig einen
Kohlenstoffgehalt bis zu 0.35 %, einen
Mangangehalt bis zu 0,8 %, einen
Phosphorgehalt bis zu 0,035 %, einen
Schwefelgehalt bis zu 0,03 %, einen
Aluminiumgehalt bis zu 0,1 %, einen
Siliciumgehalt bis zu 0,12 %, einen
Chromgehalt bis zu 1,5% und einen
Nickelgehalt bis zu 3 % auf,
wobei die Summe der Legierungselemente (außer Kohlenstoff) < 5 % ist und sich alle Prozeniangaben auf Gewichtsprozent (wt/wt) beziehen.

Gegenstand der Erfindung ist auch ein Verfahren zur Verbesserung der Oberflächenhärte von Schichtverbundwerkstoffen, insbesondere von Gleitelementen, die eine Substratschicht aus unlegiertem oder niedriglegiertem Stahl und wenigstens eine darauf aufgebrachte Funktionssschicht aus Lagermetall aufweisen, wobei die Substratsschicht eine der oder den Funktionsschichten abgewandte Oberfläche aufweist, durch Bestrahlung mit hochenergetischen Strahlen, wie Laser- oder Elektronen-Strahlen, die relativ zu einer zu bestrahlenden Oberfläche bewegt werden, dadurch gekennzeichnet, daß die abgewandte Oberfläche zumindest in ausgewählten Bereichen bestrahlt wird, wobei die Strahlung so bemessen wird, daß ihre Tiefenwirkung höchstens 1/10 der Dicke der Substratschicht im jeweiligen Bereich erreicht und daß der durch die Strahlung verursachte Temperaturanstieg der Funktionsschicht nur maximal etwa 80 % der Schmelztemperaturen der am niedrigsten schmelzenden Komponente dieser Funktionsschicht ausmacht.

Die erfindungsgemäß angewendeten Verfahrensweisen bieten den Vorteil, daß die Wärmebehandlung am Fertigteil durchgeführt werden kann, wodurch der normale Fertigungsablauf der Gleitelemente in allen Teilschritten bestehen bleiben kann. Da es sich hierbei nicht um einen Umschmelzprozeß handelt, ist auch keine mechanische Nacharbeit (z. B. Schleifen, Drehen) der modifizierten Bereiche notwendig. Außerdem ist das Verfahren umweltverträglich. Andere die Verschleißbeständigkeit des Trägermaterials verbessernde Verfahren, wie z. B. Beschichtungsverfahren, scheiden entweder aus Kostengründen (Nacharbeit erforderlich) oder aus Temperaturgründen (Diffusionsverfahren wie Carburieren, Nitrieren) aus.

Dadurch, daß eine Gefügeveränderung des Trägerwerkstoffes nur bis zu einer maximalen Tiefe des 0,1 fachen der Trägerwerkstoffdicke erfolgt, können auch dünne, verzugempfindliche Werkstücke behandelt werden. Auch bleibt das Gleitschichtmaterial bei dieser Wärmebehandlung unbeeinflußt.

Insbesondere, wenn das Gleitschichtmaterial niedgrigschmelzende Komponenten wie Zinn, Blei und/oder Wismut aufweist, darf keine zu große Temperaturbelastung auftreten. Dies gilt insbesondere dann, wenn die der modifizierten Trägerschicht benachbarte Funktionsschicht aus einer Aluminium-Zinn-Legierung (beispielsweise A1Sn20Cu) oder Bleibronze (beispielsweise CuPb22SN) besteht. Aber auch Lagerlegierungen wie Aluminiumbronze (beispielsweise CuA18) oder Kupfer-Zink-Legierung (beispielsweise CuZn31Si) oder Zinnbronze (beispielsweise CuSn8) dürfen keiner zu hohen Temperaturenbelastung ausgesetzt werden, wenn der hinsichtlich Gleiteigenschaften optimierte Gefügeaufhau nicht geschädigt werden soll.

Die eingetragene Flächenenergie liegt vorzugsweise bei 200-300 Wattsekunden pro cm², insbesondere bei 250 Wattsekunden pro cm², wobei die Verweilzeit des hochenergetischen Strahls auf der zu behandelnden Oberfläche des Trägermaterials bei 0,8 - 1,2 sec. vorzugsweise bei 1 sec liegt. Der Energieeintrag wird so gewählt, daß die Temperatur der zu behandelnden Oberfläche unterhalb der Schmelztemperatur des Trägermaterials liegt.

Der Energieeintrag wird über die Leistung der Elektronen- oder Laserkanone und/oder über die Vorschubgeschwindigkeit des Strahles gesteuert, wobei auch hier wieder die Bedingungen im Hinblick auf Tiefenwirkung und Temperaturanstieg erfüllt sein müssen.

Um eine flächendeckende Wärmebehandlung zu erzielen wird der hochenergetische Strahl längs vorgegebener Bahnen über die zu behandelnde Oberfläche geführt, wobei der Abstand der Bahnen kleiner als der Durchmesser des Focus des Strahles gewählt wird. Hierbei kann entweder das Gleitelement unter dem Strahl bewegt werden oder aber der Strahl wird über das Gleitelement geführt. Der hochenergetische Strahl kann auch vorzugsweise rasterförmig über die zu behandelnde Oberfläche geführt werden.

Die Abkühlung erfolgt vorzugsweise über den Effekt der Selbstabschreckung, d.h. durch Wärmeableitung in das Bauteilinnere, kann aber auch mit flüssigem Stickstoff durchgeführt werden, derart, daß direkt nach Behandlung mittels hochenergetischer Strahlen das Bauteil komplett in flüssigen Stickstoff eingetaucht wird, so daß ein Abschreckeffekt herbeigeführt wird.

Die Wärmebehandlung kann mittels unterschiedlichen Energieeintrags und/oder Vorschubs der hochenergetischen Strahlung auf der zu behandlenden Oberfläche derart gesteuert werden, daß während eines Behandlungsprogramms Bereiche, die einer höheren tribologischen Beanspruchung unterliegen, intensiver aufgehärtet werden als Bereiche, die einer geringen tribologischen Beanspruchung unterliegen. Es ist auch möglich, lediglich ausgewählte Bereiche des Gleitelementes mit der hochenergetischen Strahlung zu behandeln und lediglich dort eine Härtesteigerung herbeizuführen.

Vorzugsweise wird ein Trägermaterial aus un- und/oder niedriglegiertem Stahl wärmebehandelt. Im Fall des unlegierten Stahls wird vorzugweise ein solcher mit einem Kohlenstoffgehalt von maximal 0,1 %, vorzugsweise von 0,03 bis 0,06% wärmebehandelt. Überraschenderweise haben Versuche an Stahl-Lagermetallverbunden gezeigt, daß bei Stählen mit solchen Kohlenstoffgehalten (ohne weitere nennenswerte Legierungselemente) mittels eines Elektronenstrahls eine deutliche Aufhärtung der Stahloberfläche herbeigeführt werden kann. Die Härte konnte um 150 - 180% gesteigert werden.

Wenn niedrig legierte Stähle zum Einsatz kommen, so weisen diese vorzugsweise folgende Zusammensetzung auf: Kohlenstoffgehalt bis zu 0.35%, Mangangehalt bis zu 0,8%, Phosphorgehalt bis zu 0,035%, Schwefelgehalt bis zu 0,03%, Aluminiumgehalt bis zu 0,1%, Siliciumgehalt bis zu 0,12%, Chromgehalt bis zu 1,5% und Nickelgehalt bis zu 3%. Durch die Vielseitigkeit des Behandlungsverfahrens, besonders durch die exakte Steuerbarkeit der verwendeten Energiestrahlung hinsichtlich ihrer lokalen Wirksamkeit und/oder der gewünschten Härtetiefe, ist das Anwendungsfeld nicht nur auf Verbundwerkstoffe, wie z.B. Gleitlager beschränkt. Es können vielmehr auch andere tribologisch beanspruchte Motorenbauteile (Anlaufscheibe, Buchsen) oder Gleitelemente allgemein einer Optimierung des Trägerwerkstoffes unterzogen werden.

Beispielshafte Ausführungsformen der Erfindung werden nachfolgend anhand der Zeichnungen näher erläutert. Es zeigen:
- Figur 1: die perspektivische Darstellung einer Gleitlagerschale, die auf ihrer Rückseite mittels eines hochenergetischen Strahls wärmebehandelt wird,
- Figur 2: einen Schnitt längs der Linie II-II durch die in Figur 1 gezeigte Gleitlagerschale,
- Figur 3: ein Diagramm, das den Härteverlauf eines kohlenstoffarmen Stahls als Funktion der Tiefe zeigt und
- Figur 4: eine Schnittdarstellung durch einen erfindungsgemäßen Schichtwerkstoff in Vergrößerung.

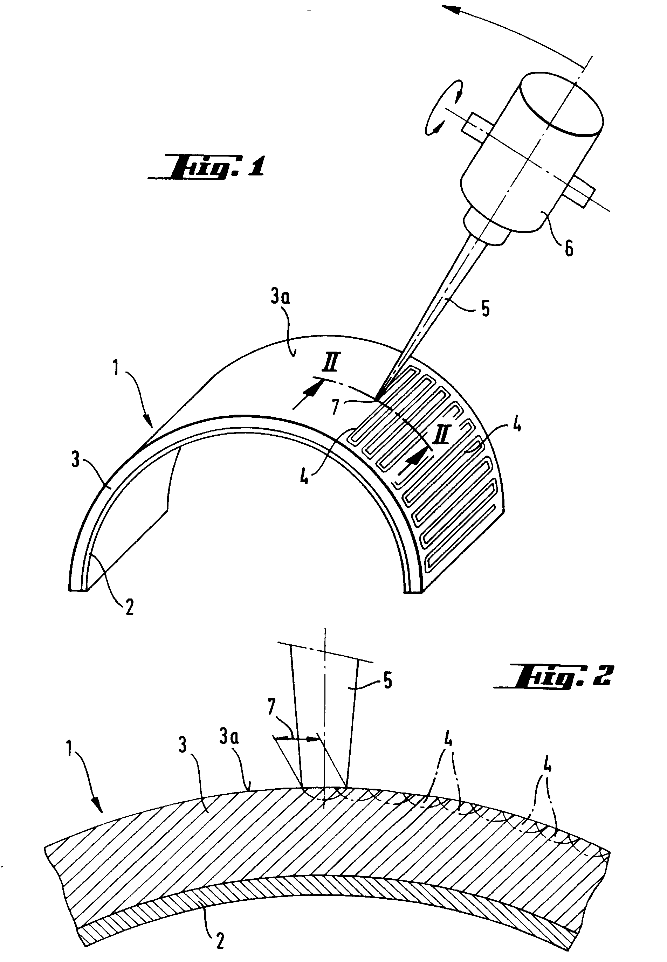

In der Figur 1 ist eine Gleitlagerschale 1 dargestellt, die ein Trägermaterial 3 aus unlegiertem Stahl aufweist, die an ihrer Innenseite mit einem Lagermaterial 2 beschichtet ist. Die Rückseite des Trägermaterials 3 wird mittels eines Elektronenstrahls 5, der in einer Elektronenkanone 6 erzeugt wird, wärmebehandelt. In der hier gezeigten Ausführungsform befindet sich die Lagerschale 1 in Ruhe und der hochenergetische Strahl 5 wird längs der Bahnen 4 über die Rückseite des Trägermaterials 3 geführt. In der Figur 1 ist der Abstand der Bahnen 4 aus Gründen der Übersichtlichkeit beabstandet dargestellt. Tatsächlich liegen die Bahnen jedoch so dicht, daß sie sich - wie in der Figur 2 dargestellt ist - überschneiden. Da die Bahnbreite durch die Focusfläche 7 definiert wird, ist der Abstand der Bahnen 4 kleiner gewählt als der Focusdurchmesser. Es ist deutlich zu sehen, daß die Wärmebehandlung sich nur in einem Teilbereich des Trägermaterials 3 erstreckt, so daß das Lagermaterial 2 von dieser Wärmebehandlung unbeeinflußt bleibt.

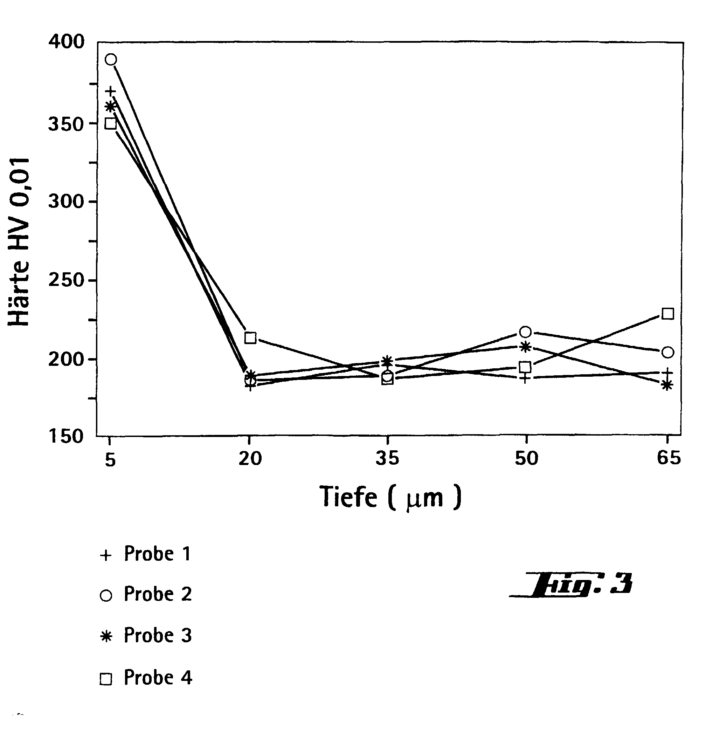

In der Figur 3 ist der Härteverlauf eines elektronenstrahlenbehandelten kohlenstoffarmen Stahles als Funktion der Tiefe dargestellt. Der Stahl wies 0,05 % Kohlenstoff und 0,25% Mangan auf. Die eingetragene Flächenenergie lag bei 250 Wattsekunden pro cm² bei einer Behandlungszeit von etwa 1 Sekunde. Deutlich ist in diesem Diagramm erkennbar, daß hierbei ein Härteunterschied von 150 bis 200 HV 0,01 zwischen der Oberfläche und dem Bulkmaterial erzielt wurde. Es wurden mehrere Proben untersucht, wobei sich bei allen Proben derselbe Kurvenverlauf zeigte.

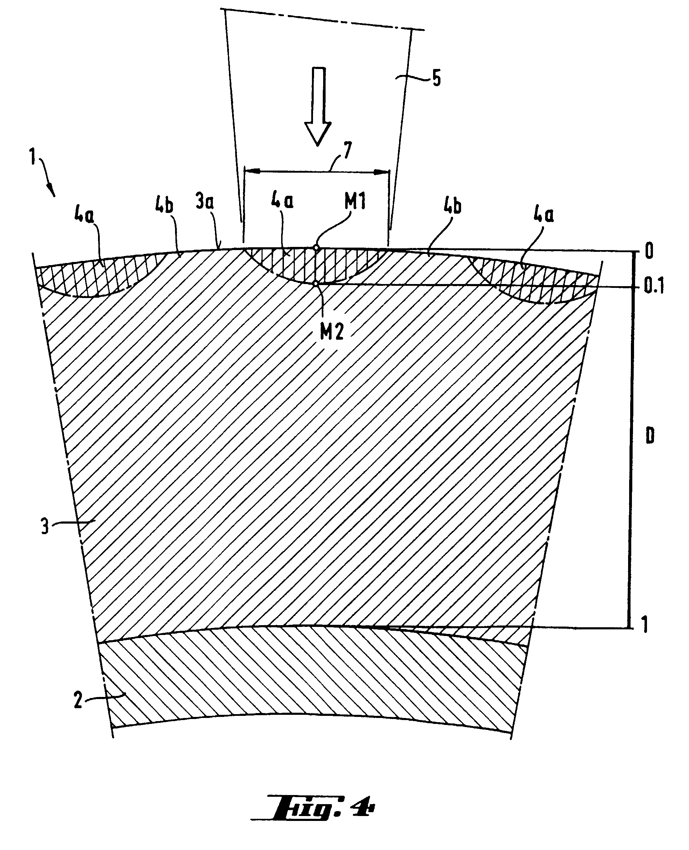

In Figur 4 erkennt man, daß es an derjenigen Oberfläche 3a des Trägermaterials 3, die nicht mit der Funktionsschicht 2 verbunden ist, in folge der erfindungsgemäßen Behandlung zu einer Aufhärtung 4a durch Anreicherung von Kohlenstoff im behandelten Bereich 4a kommt. In den unbehandelten Bereichen 4b des Trägers 3 ist die Härte (Kohlenstoffgehalt) im wesentlichen unverändert, verglichen mit dem Zustand vor Einwirkung von hochenergestischen Strahlen 5 auf die Oberflächenbereiche 4a.

Mit D ist in Figur 4 die Dicke oder gesehen aus Richtung der nicht mit der Funktionsschicht und daher dieser abgewandten Oberfläche 0 auch die Tiefe der Stahlsubstratschicht bezeichnet. Zur Bestimmung der Aufhärtung wird die Vickers Härte an der Oberfläche 0 im bestrahlten Bereich 4a gemessen, sowohl am Messpunkt M 1 als auch in der Tiefe 0,1 D am Meßpunkt M2. Ausgehend von M1 wird M2 erreicht, indem man lotrecht von M1 0,1 D in Richtung Funktionsschicht geht. Die Differenz M1-M2 entspricht der Aufhärtung.

### Bezugszeichenliste:

- 1: Lagerschale, Verbundwerkstoff
- 2: Lagermaterial, Funktionsschicht
- 3: Trägermaterial, Substratschicht aus Stahl
- 3a: Oberfläche des Trägermaterials
- 4: Behandlungsbahn
- 4a: behandelte Bereiche mit Anreicherung des Kohlenstoffs
- 4b: unbehandelte Bereiche
- 5: hochenergetischer Strahl
- 6: Strahlenkanone
- 7: Focus

## Patentansprüche

1. Schichtverbundwerkstoff mit Substratschicht aus Stahl und wenigstens einer darauf aufgebrachten Funktionsschicht aus Lagermetall, wobei das Substrat ein unlegierter oder niedriglegierter Stahl mit einem C-Gehalt von < 0,35% (wt/wt) ist und eine der oder den Funktionsschichtenabgewandte Oberfläche aufweist, dadurch gekennzeichnet, daß das Stahlsubstrat zumindest an Teilen der abgewandten Oberfläche eine um den Faktor 1,5 oder größer erhöhte Härte als in einer Tiefe aufweist, die etwa dem 0,1 fachen der Dicke des Stahlsubstrats entspricht, wobei die Härte als Vickers Härte HV 0.01 gemessen und die Tiefe oder Dicke von der abgewandten Oberfläche mit erhöhter Härte ausgehend orthogonal in Richtung der Funktionsschicht(en) bestimmt wird.

2. Schichtverbundwerkstoff nach Anspruch 1, dadurch gekennzeichnet,daß die Substratschicht aus Stahl eine Dicke im Bereich von etwa 0,2 - 20 mm aufweist.

3. Schichtverbundwerkstoff nach Anspruch 2, dadurch gekennzeichnet, daß die Substratschicht aus Stahl eine Dicke im Bereich von etwa 0,5 - 15 mm aufweist.

4. Schichtverbundwerkstoff nach einem oder mehreren der Ansprüche 1 - 3. dadurch gekennzeichnet,
daß die Substratschicht aus unlegiertem Stahl ist, der einen C-Gehalt im Bereich von 0,03 bis 0,06 % (wt/wt) aufweist.

5. Schichtverhundwerkstoff nach einem oder mehreren der Ansprüche 1 - 3, dadurch gekennzeichnet, daß die Substratschicht aus niedrig legiertem Stahl ist, der einen Kohlenstoffgehalt bis zu 0,35%, einen Mangangehalt bis zu 0,8%, einen Phosphorgehalt bis zu 0,035%, einen Schwefelgehalt bis zu 0,03%, einen Aluminiumgehalt bis zu 0,1%, einen Siliciumgehalt bis zu 0,12%, einen Chromgehalt bis zu 1,5% und einen Nickelgehalt bis zu 3% aufweist, wobei die Summe der Legierungselemente (außer Kohlenstoff) < 5% ist und sich alle Prozentangaben auf Gewichtsprozent (wt/wt) beziehen.

6. Verfahren zur Verbesserung der Oberflächenhärte von Schichtverbundwerksioffen, insbesondere von Gleitelementen, die eine Substratschicht aus unlegiertem oder niedrig legiertem Stahl und wenigstens eine darauf aufgebrachte Funktionsschicht aus Lagermetall aufweisen, wobei die Substratschicht eine der oder den Funktionsschichten abgewandte Oberfläche aufweist, durch Bestrahlung mit hochenergetischen Strahlen, wie Laser- oder Elektronen-Strahlen, die relativ zu einer zu bestrahlenden Oberfläche bewegt werden,
dadurch gekennzeichnet, daß
die abgewandte Oberfläche zumindest in ausgewählten Bereichen hestrahlt wird, wobei die Strahlung so bemessen wird, daß ihre Tiefenwirkung höchstens 1/10 der Dicke der Substratschicht im jeweiligen Bereich erreicht und daß der durch die Strahlung verursachte Temperaturanstieg der Funktionsschicht nur maximal etwa 80% der Schmelztemperaturen der am niedrigsten schmelzenden Komponente dieser Funkktionsschicht ausmacht.

7. Verfahren nach Anspruch 6, dadurch gekennzeichnet, daß die Flächenergie und Verweilzeit der hochenergetischen Strahlung so gewählt werden, daß die abgewandte Oberfläche im bestrahlten Bereich der Stahlsubstratschicht eine Aufhärtung auf mindestens das 1,5 fache der Ausgangshärte erfährt.

8. Verfahren nach Anspruch 6 oder 7, dadurch gekennzeichnet, daß der hochenergetische Strahl längs vorgegebener Bahnen über die zu behandelnde Oberfläche geführt wird, wobei der Abstand der Bahnen kleiner als der Focus des Strahls eingestellt wird.

9. Verfahren nach einem der Ansprüche 6 bis 8, dadurch gekennzeichnet, daß der hochenergetische Strahl mit einer Flächen-Geschwindigkeit von 3 - 5 cm²/sec über die zu behandelnde Oberläche geführt wird.

10. Verfahren nach einem der Ansprüche 6 bis 9, dadurch gekennzeichnet, daß der hochenergetische Strahl rasterförmig über die zu behandelnde Oberfläche geführt wird.

11. Verfahren nach einem der Ansprüche 6 bis 10, dadurch gekennzeichnet, daß die mit hochenergetischer Strahlung bestrahlte Oberfläche über den Effekt der Selbstabschreckung abgekühlt wird.

12. Verfahren nach einem der Ansprüche 6 bis 10, dadurch gekennzeichnet, daß der Verbundwerkstoff nach der Bestrahlung mittels flüssigem Stickstoff abgeschreckt wird.

13. Verfahren nach einem der Ansprüche 6 bis 12, dadurch gekennzeichnet, daß mittels unterschiedlichem Energieeintrag und/oder Vorschub der hochenergetischen Strahlung auf der abgewandten Oberfläche die Modifikation derart gesteuert wird, daß während eines Bestrahlungsprozesses Bereiche, die einer höheren tribologischen Beanspruchung unterliegen, intensiver ausgehärtet werden als Bereiche, die einer geringeren tribologischen Beanspruchung unterliegen.

14. Verfahren nach Anspruch 6 - 13, dadurch gekennzeichnet, daß unlegierter Stahl mit einem Kohlenstoffgehalt von 0,03 bis 0,06% wärmebehandelt wird.

15. Verfahren nach Anspruch 6 - 13, dadurch gekennzeichnet, daß niedriglegierter Stahl folgender Zusammensetzung wärmebehandelt wird:
Kohlenstoffgehalt bis zu 0,35%, Mangangehalt bis zu 0,8%, Phosphorgehalt bis zu 0,035%, Schwefelgehalt bis zu 0,03%, Aluminiumgehalt bis zu 0,1% und Siliciumgehalt bis zu 0,12%. Chromgehalt bis zu 1,5% und Nickelgehalt bis maximal 3%. Legierungselemente (außer Kohlenstoff) < 5%.

## Claims

1. A laminate composite material with a substrate layer of steel and at least one function layer of bearing metal applied thereto, wherein the substrate is an unalloyed or low-alloy steel with a C-content of < 0.35% (wt/wt) and has a surface remote from the function layer or layers, characterised in that the steel substrate at least at parts of the remote surface is of a hardness which is increased by the factor of 1.5 or greater than at a depth which corresponds approximately to 0.1 times the thickness of the steel substrate, wherein the hardness is measured as Vickers hardness VH 0.01 and the depth or thickness is determined starting from the remote surface with increased hardness orthogonally in the direction of the function layer or layers.

2. A laminate composite material according to claim 1 characterised in that the substrate layer of steel is of a thickness in the range of about 0.2 - 20 mm.

3. A laminate composite material according to claim 2 characterised in that the substrate layer of steel is of a thickness in the range of about 0.5 - 15 mm.

4. A laminate composite material according to one or more of claims 1 to 3 characterised in that the substrate layer is of unalloyed steel which has a C-content in the range of from 0.03 to 0.06% (wt/wt).

5. A laminate composite material according to one or more of claims 1 to 3 characterised in that the substrate layer is of low-alloy steel which has a carbon content of up to 0.35%, a manganese content of up to 0.8%, a phosphorus content of up to 0.035%, a sulphur content of up to 0.03%, an aluminium content of up to 0.1%, a silicon content of up to 0.12%, a chromium content of up to 1.5% and a nickel content of up to 3%, wherein the sum of the alloying elements (except carbon) is < 5% and all percentages relate to percent by weight (wt/wt).

6. A process for improving the surface hardness of laminate composite materials, in particular sliding elements, which have a substrate layer of unalloyed or low-alloy steel and at least one function layer of bearing metal applied thereto, wherein the substrate layer has a surface remote from the function layer or layers, by irradiation with high-energy beams such as laser or electron beams which are moved relative to a surface to be irradiated, characterised in that the remote surface is irradiated at least in selected regions, wherein the radiation is of such a magnitude that its action in respect of depth reaches at most 1/10th of the thickness of the substrate layer in the respective region and that the rise in temperature of the function layer caused by the radiation is only at a maximum about 80% of the melting temperature of the component of said function layer which has the lowest melting point.

7. A process according to claim 6 characterised in that the energy in relation to surface area and the residence time of the high-energy radiation are so selected that the remote surface in the irradiated region of the steel substrate layer experiences a hardening effect to at least 1.5 times the initial hardness.

8. A process according to claim 6 or claim 7 characterised in that the high-energy beam is guided along predetermined paths over the surface to be treated, wherein the spacing of the paths is set to be less than the focus of the beam.

9. A process according to one of claims 6 to 8 characterised in that the high-energy beam is guided over the surface to be treated at a speed in relation to surface area of 3 - 5 cm²/sec.

10. A process according to one of claims 6 to 9 characterised in that the high-energy beam is guided over the surface to be treated in a grid form.

11. A process according to one of claims 6 to 10 characterised in that the surface which is irradiated with high-energy radiation is cooled by way of the effect of self-quenching.

12. A process according to one of claims 6 to 10 characterised in that the composite material is quenched after the irradiation step by means of liquid nitrogen.

13. A process according to one of claims 6 to 9 characterised in that by means of different energy input and/or advance of the high-energy radiation on the remote surface the modification is controlled in such a way that during an irradiation process regions which are subject to a higher tribological loading are hardened more intensively than regions which are subject to a lower tribological loading.

14. A process according to claims 6 to 13 characterised in that unalloyed steel with a carbon content of 0.03 to 0.06% is heat-treated.

15. A process according to claims 6 to 13 characterised in that low-alloy steel of the following composition is heat-treated:
a carbon content of up to 0.35%, a manganese content of up to 0.8%, a phosphorus content of up to 0.035%, a sulphur content of up to 0.03%, an aluminium content of up to 0.1% and a silicon content of up to 0.12%, a chromium content of up to 1.5% and a nickel content of up to 3%, alloying elements (except carbon) < 5%.

## Revendications

1. Matériau composite stratifié présentant une couche de substrat en acier et au moins une couche fonctionnelle appliquée dessus en métal antifriction, le substrat étant un acier non allié ou faiblement allié présentant une teneur en C < 0,35 % (en masse) et présentant une surface opposée à la ou aux couche(s) fonctionnelle(s), caractérisé en ce que le substrat en acier présente au moins sur des parties de la surface opposée une dureté améliorée du facteur 1,5 ou plus par rapport à celle d'une profondeur qui correspond à environ 0,1 fois l'épaisseur du substrat d'acier, la dureté étant mesurée en tant que dureté Vickers HV 0,01 et la profondeur ou l'épaisseur étant déterminée en partant de la surface opposée présentant une dureté supérieure et en allant perpendiculairement dans la direction de la (des) couche(s) fonctionnelle(s).

2. Matériau composite stratifié selon la revendication 1, caractérisé en ce que la couche de substrat en acier présente une épaisseur comprise dans la gamme allant d'environ 0,2 à 20 mm.

3. Matériau composite stratifié selon la revendication 2, caractérisé en ce que la couche de substrat en acier présente une épaisseur comprise dans la gamme allant d'environ 0,5 à 15 mm.

4. Matériau composite stratifié selon une ou plusieurs des revendications 1 à 3, caractérisé en ce que la couche de substrat se compose d'acier non allié qui présente une teneur en C comprise dans la gamme allant de 0,03 à 0,06 % en masse.

5. Matériau composite stratifié selon une ou plusieurs des revendications 1 à 3, caractérisé en ce que la couche de substrat se compose d'acier faiblement allié qui présente une teneur en C allant jusqu'à 0,35 %, une teneur en manganèse allant jusqu'à 0,8 %, une teneur en phosphore allant jusqu'à 0,035 %, une teneur en soufre allant jusqu'à 0,03 %, une teneur en aluminium allant jusqu'à 0,1 %, une teneur en silicium allant jusqu'à 0,12 %, une teneur en chrome allant jusqu'à 1,5 % et une teneur en nickel allant jusqu'à 3 %, la somme des éléments d'alliage (à l'exception du carbone) étant < 5 % et tous les pourcentages étant exprimés en pourcentages en masse.

6. Procédé permettant d'améliorer la dureté superficielle de matériaux composites stratifiés, en particulier d'éléments de glissement, qui présentent une couche de substrat composée d'un acier non allié ou faiblement allié et au moins une couche fonctionnelle appliquée dessus en métal antifriction, la couche de substrat présentant une surface opposée à la ou aux couche(s) fonctionnelle(s), par irradiation avec des faisceaux à haute énergie, comme des faisceaux laser ou électroniques, qui sont déplacés par rapport à une surface à irradier, caractérisé en ce que la surface opposée est au moins irradiée dans des zones sélectionnées, l'irradiation étant calculée de façon telle que son action en profondeur atteint au plus 1/10 de l'épaisseur de la couche de substrat dans chaque zone respective et en ce que l'augmentation de température de la couche fonctionnelle provoquée par l'irradiation ne correspond qu'à environ 80 % au maximum des températures de fusion des composants de la couche fonctionnelle présentant le plus bas point de fusion.

7. Procédé selon la revendication 6, caractérisé en ce que l'énergie de surface et le temps de contact du rayonnement à haute énergie sont sélectionnés de façon telle que la surface opposée dans la zone irradiée de la couche de substrat en acier entraîne un durcissement représentant au moins 1,5 fois la dureté de départ.

8. Procédé selon la revendication 6 ou 7, caractérisé en ce que le faisceau à haute énergie est amené le long de voies prédéfinies sur la surface à traiter, l'écart entre les voies étant réglé pour être inférieur à celui du foyer du faisceau.

9. Procédé selon l'une des revendications 6 à 8, caractérisé en ce que le faisceau à haute énergie est conduit avec une vitesse de surface de 3 à 5 cm²/s par-dessus la surface à traiter.

10. Procédé selon l'une des revendications 6 à 9, caractérisé en ce que le faisceau à haute énergie est conduit par balayage par-dessus la surface à traiter.

11. Procédé selon l'une des revendications 6 à 10, caractérisé en ce que la surface traitée par le rayonnement à haute énergie est refroidie sous l'effet d'un auto-refroidissement brusque.

12. Procédé selon l'une des revendications 6 à 10, caractérisé en ce que le matériau composite est refroidi brusquement après l'irradiation au moyen d'azote liquide.

13. Procédé selon l'une des revendications 6 à 12, caractérisé en ce que la modification est commandée au moyen d'un apport d'énergie et/ou d'une avancée du faisceau à haute énergie différents sur la surface opposée de façon telle que, pendant un procédé d'irradiation, les zones qui sont soumises à une sollicitation en tribologie importante sont durcies plus intensément que les zones soumises à une moindre sollicitation en tribologie.

14. Procédé selon la revendication 6 à 13, caractérisé en ce qu'un acier non allié présentant une teneur en carbone comprise entre 0,03 et 0,06 % est traité thermiquement.

15. Procédé selon la revendication 6 à 13, caractérisé en ce qu'un acier faiblement allié présentant la composition suivante :
teneur en carbone jusqu'à 0,35 %,
teneur en manganèse jusqu'à 0,8 %,
teneur en phosphore jusqu'à 0,035 %,
teneur en soufre jusqu'à 0,03 %,
teneur en aluminium jusqu'à 0,1 %,
teneur en silicium jusqu'à 0,12 %,
teneur en chrome jusqu'à 1,5 %
et teneur en nickel jusqu'à 3 % au maximum.
éléments d'alliage (sauf carbone) < 5%,
est traité thermiquement.
